# EUROPÄISCHE PATENTSCHRIFT

(11) **EP 3 225 420 B1**
(45) Veröffentlichungstag und Bekanntmachung des Hinweises auf die Patenterteilung: **11.12.2019**
(21) Anmeldenummer: 17163494.2
(22) Anmeldetag: 29.03.2017
(51) Int. Cl.: B60B 7/00, B60B 7/08, B60B 7/04

(54) **NUTZFAHRZEUG-RADNABE MIT MEHRTEILIGEM NABENDECKEL**
COMMERCIAL VEHICLE WHEEL HUB HAVING A MULTI-PIECE HUBCAP
MOYEU DE VÉHICULE UTILITAIRE COMPRENANT UN ENJOLIVEUR DE ROUE EN PLUSIEURS PARTIES

(30) Priorität: 31.03.2016 DE 102016205405
(43) Veröffentlichungstag der Anmeldung: 04.10.2017
(73) Patentinhaber: JOST-Werke Deutschland GmbH, 63263 Neu-Isenburg (DE)
(72) Erfinder: Kraus, Willi, 67310 Hettenleidelheim (DE)
(74) Vertreter: Ruttensperger Lachnit Trossin Gomoll

(56) Entgegenhaltungen:
- WO-A1-2010/096050
- US-A- 5 443 582
- US-A1- 2005 099 820
- US-A1- 2015 170 558

## Beschreibung

Die vorliegende Erfindung betrifft eine Nutzfahrzeug-Radnabe, welche um eine virtuelle Nabendrehachse drehbar ist, mit einer von der virtuellen Nabendrehachse durchsetzten Mittenausnehmung, welche durch einen mit der Radnabe verbundenen Nabendeckel abgedeckt ist.

Derartige Nutzfahrzeug-Radnaben mit Nabendeckel sind im Stand der Technik hinlänglich bekannt. Üblicherweise sind auf den im fertig montierten Zustand des Nabendeckels axial - bezogen auf die Nabendrehachse - nach außen von der jeweiligen Fahrzeugmitte weg weisenden Sichtflächen des Nabendeckels Logos und Embleme des jeweiligen Fahrzeugherstellers oder Achsenherstellers vorgesehen, sodass zumindest am stillstehenden Fahrzeug auch anhand des Nabendeckels die Herstellerherkunft des Fahrzeugs oder wenigstens der Fahrzeugachse erkennbar ist. Mit "Nutzfahrzeug" sind in der vorliegenden Anmeldung sowohl Zugfahrzeuge als auch an Zugfahrzeuge ankuppelbare Nachlauffahrzeuge bezeichnet. Die Nutzfahrzeuge sind dabei insbesondere schwere Lkw mit einem zulässigen Gesamtgewicht von mehr als 7,5 Tonnen, bevorzugt von mehr als 12 Tonnen, bei Zugfahrzeugen und von mehr als 2 Tonnen bei Nachlauffahrzeugen.

Technisch sorgt der Nabendeckel an der mit den Fahrzeugrädern mitdrehenden Radnabe für eine Sicherung gegen Schmutzeintritt in die Radnabe, in welche am fahrbereiten Fahrzeug in der Regel der Achszapfen der Fahrzeugachse einragt. Auf dem Achszapfen ist die Radnabe drehbar gelagert, in der Regel durch Wälzlager. Somit dient der Nabendeckel an der Nutzfahrzeug-Radnabe auch der Abdeckung des axialen Längsendes einer Nutzfahrzeug-Achse.

Üblicherweise werden im Stand der Technik als Nabendeckel einstückige topfförmige Schalenbauteile aus Metall oder Kunststoff verwendet, die axial auf die Radnabe aufgesteckt und mit geeigneten Verbindungsmitteln mit der Radnabe verbunden werden.

Weiterhin ist es bekannt, in den Nabendeckeln Wegstreckenzähler, sogenannte Nabenhodometer, anzuordnen, die vor allem bei Nachlauffahrzeugen ohne eigenen Tachometer die Laufleistung registrieren. Zur Aufnahme derartiger Wegstreckenzähler ist ein eigener Nabendeckel zu verwenden, welcher durch entsprechende konstruktive Gestaltung eigens zur Aufnahme des Wegstreckenzählers ausgebildet ist. Nabenhodometer werden im deutschen Sprachraum gelegentlich auch mit dem englischen Begriff "Hubodometer" bezeichnet.

Aus der US 2015/0170558 A1 ist eine zur verrastenden Anordnung an eine Radfelge ausgebildete Radkappe bekannt, welche grundsätzlich zwei Bauteile aufweist: Einen mit der Radfelge verrastbaren Grundkörper und einen drehbar am Grundkörper anordenbaren Deckel mit exzentrischer Masseverteilung, sodass dieser bei ausreichend vorteilhaften Reibungsverhältnissen im Bereich seiner drehbaren Anordnung am Grundkörper im Falle einer Drehung des mit der Radfelge verbundenen Grundkörpers nicht mitdreht.

Aus der US 2005/0099820 A1 ist eine Vorrichtung bekannt, welche die Anordnung einer Radbeleuchtung eines PKW-Rades an der Außenseite einer Radfelge ermöglicht.

Aus der US 5 443 582 A ist eine Radkappe bekannt, welche an eine Radfelge angeschraubt werden kann. Zwischen der Radfelge und der Radkappe sind Montagehilfen angeordnet, welche ermöglichen, ein und dieselbe Radkappe an unterschiedliche Radfelgen unabhängig vom Lochbild der Radfelge anzuordnen.

An der Radkappe vorgesehene Befestigungslaschen, welche von Befestigungsschrauben zur Anbringung an der Radfelge durchsetzt werden, sind bezüglich der Außenfläche der Radkappe vertieft angeordnet. Diese die Befestigungslaschen aufweisende Vertiefung kann durch eine in die Vertiefung einrastbare Kappe bedeckt werden.

Aus der WO 2010/096050 A1 ist eine mit einer Radfelge verrastbare mehrteilige Radkappe bekannt, welche zwischen einem mit der Radfelge verrastbaren Grundkörper und einem darauf angeordneten Deckel eine Beleuchtungseinrichtung trägt.

Es ist Aufgabe der vorliegenden Erfindung, die eingangs genannte Nutzfahrzeug-Radnabe derart weiterzubilden, dass unabhängig davon, ob ein Funktionsbauteil, wie etwa der zuvor genannte Wegstreckenzähler, im Nabendeckel anzuordnen ist oder nicht, stets derselbe Nabendeckel an der Nutzfahrzeug-Radnabe vorgesehen werden kann. Dann kann nämlich die Bevorratung lediglich einer einzigen Art von Nabendeckeln ausreichen, um Mittenausnehmungen von Nutzfahrzeug-Radnaben abzudecken, ohne Rücksicht darauf, ob im Nabendeckel ein Funktionsbauteil aufgenommen ist oder nicht, oder welches von mehreren unterschiedlichen Funktionsbauteilen aufgenommen ist.

Diese Aufgabe wird erfindungsgemäß gelöst durch eine gattungsgemäße Nutzfahrzeug-Radnabe, wie sie eingangs dieser Anmeldung definiert ist, welche alle Merkmale des Anspruchs 1 aufweist. Bei dieser Radnabe ist der Nabendeckel wenigstens zweiteilig ausgebildet und weist einen Grundkörper sowie einen gesondert vom Grundkörper ausgebildeten Deckelkörper auf, wobei der Grundkörper eine Montageseite und eine der Montageseite entgegengesetzte Sichtseite aufweist. Der Grundkörper ist auf der Montageseite mit der Radnabe verbunden oder verbindbar und ist auf der der Sichtseite mit einem Anbringungsabschnitt des Deckelkörpers verbunden oder verbindbar.

Durch die mehrteilige Ausbildung des Nabendeckels mit wenigstens einem Grundkörper und einem gesondert von diesem ausgebildeten Deckelkörper kann der Nabendeckel für eine Vielzahl unterschiedlicher Aufgaben, einschließlich der bloßen Abdeckung der Mittenausnehmung der Nutzfahrzeug-Radnabe, konfiguriert und an der Nutzfahrzeug-Radnabe vorgesehen werden.

Die Montageseite des Grundkörpers ist dabei jene Seite, welche an einem mit der erfindungsgemäßen Nutzfahrzeug-Radnabe ausgerüsteten, fahrbereiten und auf einem horizontalen ebenen Untergrund stehenden Fahrzeug zu einer vertikalen Fahrzeuglängsmittelebene hinweist und zur Verbindung mit der Radnabe ausgebildet ist. Die Montageseite weist also an dem fahrbereiten Nutzfahrzeug von einem seitlich am Fahrzeug vorbeigehenden Passanten weg.

Dementsprechend ist die Sichtseite des Grundkörpers jene Seite, welche von der vertikalen Fahrzeuglängsmittelebene weg weist und zu dem seitlich am Fahrzeug vorbeigehenden Passanten hinweist. Die Sichtseite ist zur Verbindung mit dem Deckelkörper ausgebildet.

Das in dieser Anmeldung zur Erläuterung der erfindungsgemäßen Nutzfahrzeug-Radnabe genannte fahrbereite Nutzfahrzeug ist, soweit nicht anders erwähnt, auf einem ebenen horizontalen Untergrund aufstehend zu verstehen.

Der Grundkörper erstreckt sich längs einer Grundkörperachse, welche im fertig montierten Zustand der Nutzfahrzeug-Radnabe mit der virtuellen Nabendrehachse kollinear ist. Die virtuelle Nabendrehachse ist keine körperliche Achse im Sinne eines Bauteils, sondern ist lediglich jene virtuelle bzw. mathematische Achse, um welche die Radnabe im Betrieb dreht.

Wenngleich der Nabendeckel aus drei oder mehr Teilkörpern gebildet sein kann, ist er zur einfachen Herstellung und Montage bevorzugt zweiteilig ausgebildet und umfasst nur den Grundkörper und den Deckelkörper. Ein etwaig im oder am Nabendeckel aufzunehmendes Funktionsbauteil ist kein Teilkörper des Nabendeckels im Sinne der vorliegenden Anmeldung.

Um dem Grundkörper ausreichend Stabilität zu verleihen, kann dieser einen ringförmigen Hülsenabschnitt aufweisen, welcher sich längs der Grundkörperachse erstreckt. Der Hülsenabschnitt kann in axialer Richtung lokal unterschiedliche Wandstärken aufweisen. Der Grundkörper kann auch in Umfangsrichtung um die Grundkörperachse, wie weiter unten näher erläutert werden, lokal unterschiedliche Wandstärken aufweisen.

Um am Grundkörper grundsätzlich die Möglichkeit zu schaffen, erforderlichenfalls Funktionsbauteile anzuordnen, weist der Hülsenabschnitt bevorzugt einen nach radial innen vorstehenden Basisabschnitt auf. Der Basisabschnitt kann aus einem vom Hülsenabschnitt nach radial innen vorstehenden Radialvorsprung gebildet sein. Der Radialvorsprung läuft vorzugsweise in Umfangsrichtung um die Grundkörperachse um, besonders bevorzugt geschlossen um. Er kann zusätzlich oder alternativ den Hülsenabschnitt radial innen vollständig durchquerende Streben aufweisen. Bevorzugt überspannt der Basisabschnitt den Hülsenabschnitt radial innen vollständig und bildet somit eine das vom Hülsenabschnitt umgebene Innenvolumen axial vollständig trennende Trennwand.

Bevorzugt ist der Basisabschnitt wenigstens teilweise eben, um eine Montage von Funktionsbauteilen daran zu erleichtern. Zur Erhöhung seiner Stabilität und Steifigkeit kann der Basisabschnitt verrippt sein oder/und in axiale Richtung vorstehende Ausstülpungen oder Sicken aufweisen. Zur Sicherstellung einer umfangsrichtungsunabhängig homogenen Steifigkeit können Rippen oder/und Sicken oder/und Ausstülpungen in Umfangsrichtung um die Nabendrehachse bzw. Grundkörperachse umlaufen oder/und in radialer Richtung verlaufend mit gleichem Winkelabstand um die Grundkörperachse im Basisabschnitt ausgebildet sein. Bevorzugt ist eine kreisförmig geschlossen um die Grundkörperachse umlaufende axiale Ausstülpung im Basisabschnitt ausgebildet, die zusätzlich durch radial verlaufende, die Ausstülpung radial durchquerende Rippen versteift ist.

Grundsätzlich kann der Basisabschnitt an einem axialen Längsende des Grundkörpers gelegen sein. Da jedoch der Grundkörper mit seiner Montageseite an der Mittenausnehmung der Radnabe angeordnet oder anordenbar ist und auf seiner Sichtseite mit dem Deckelabschnitt verbunden oder verbindbar ist, ist es bevorzugt, wenn der Basisabschnitt mit axialem Abstand von den axialen Längsenden des Hülsenabschnitts vorgesehen ist, sodass sich der Hülsenabschnitt axial zu beiden Seiten des Basisabschnitts erstreckt.

Auch der Deckelkörper erstreckt sich längs einer Deckelkörperachse, welche in einem Bezugszustand mit bestimmungsgemäß mit dem Grundkörper verbundenen Deckelkörper mit der Grundkörperachse kollinear ist und somit eine Nabendeckelachse des Nabendeckels insgesamt bildet. Auch die Deckelkörperachse ist am fahrbereiten Fahrzeug mit der virtuellen Nabendrehachse kollinear.

Der Deckelkörper weist zum einen aus Gründen vorteilhaft hoher Stabilität und Steifigkeit und zum anderen zur Bereitstellung eines vom Nabendeckel eingenommenen Mindest-Bauteilvolumens einen ringförmigen Schürzenabschnitt auf, welcher sich längs der Deckelkörperachse erstreckt. Da der Deckelkörper einen axialen Abschluss der Nutzfahrzeug-Radnabe - oder von außerhalb des fahrbereiten Fahrzeugs laienhaft wahrnehmbar auch der Nutzfahrzeug-Achse - bildet, weist der Deckelkörper einen den Schürzenabschnitt radial innen überspannenden Deckelabschnitt auf, welcher den Schürzenabschnitt in axialer Richtung abschließt.

Grundsätzlich kann der Deckelabschnitt an einer beliebigen Stelle des Schürzenabschnitts angeordnet sein. Bevorzugt kragt der Schürzenabschnitt längs der Deckelkörperachse auf der in dem genannten Bezugszustand zum Grundkörper hinweisenden Anbringungsseite des Deckelabschnitts einseitig axial aus. Der Deckelabschnitt bildet dann bevorzugt den axialen Abschluss der Nutzfahrzeug-Radnabe bzw. der Nutzfahrzeug-Achse insgesamt.

Da wenigstens ein Teil des Schürzenabschnitts sich axial vom Deckelkörper weg erstreckt, kann der Deckelabschnitt in vorteilhafter Weise bezogen auf die Nabendeckelachse mit axialem Abstand vom Basisabschnitt angeordnet sein. Dieser Abstand kann umso größer ausfallen, je näher sich der Deckelabschnitt an dem im Bezugszustand vom Grundkörper fern liegenden axialen Längsende des Schürzenabschnitts befindet, und je näher sich der Basisabschnitt an dem im Bezugszustand vom Deckelkörper fern liegenden axialen Längsende des Grundkörpers befindet.

Erfindungsgemäß ist zwischen dem Deckelkörper und dem Grundkörper ein Aufnahmeraum gebildet, welcher zur beliebigen Nutzung bereitsteht. Dieser Aufnahmeraum ist bevorzugt in axialer Richtung durch den Deckelabschnitt und den Basisabschnitt und in radialer Richtung durch den Hülsenabschnitt oder/und durch den Schürzenabschnitt oder/und durch den Anbringungsabschnitt begrenzt. Somit kann der Aufnahmeraum vollständig von der Außenumgebung abgetrennt sein.

In dem Aufnahmeraum kann ein Funktionsbauteil angeordnet sein. Dieses Funktionsbauteil kann ein beliebiges Funktionsbauteil sein. Beispielsweise kann es ein Nabenhodometer oder allgemein ein Wegstreckenzähler sein oder eine Pendelscheibe, welche am Nabenkörper relativ zu diesem drehbar derart angeordnet ist, dass sie bei gemeinsamer Drehung von Nabendeckel und der ihn tragenden Nutzfahrzeug-Radnabe in einer durch ein exzentrisches Pendelgewicht der Pendelscheibe definierten Stellung verbleibt. Weiter kann das Funktionsbauteil Teil einer Reifendruck-Überwachungseinrichtung sein. Beispielsweise kann das Funktionsbauteil eine Druckübertragungsleitung und dgl. sein.

Unabhängig davon, ob in dem Nabendeckel ein Funktionsbauteil aufgenommen ist oder nicht, kann somit stets derselbe Grundkörper mit demselben Deckelkörper zum Nabendeckel kombiniert werden. Im einfachsten Falle bleibt der Aufnahmeraum leer.

Lediglich der Vollständigkeit halber sei darauf hingewiesen, dass der Deckelkörper auch wenigstens einen sich hauptsächlich in radiale Richtung erstreckenden Körperabschnitt aufwiesen kann, etwa um Abschnitte mit unterschiedlichen radialen Abmessungen miteinander zu verbinden. Beispielsweise kann ein im Bezugszustand dem Grundkörper ferner liegender Abschnitt des Deckelkörpers, welcher bevorzugt auch den Deckelabschnitt aufweist, in vertrauter ästhetischer Anmutung einer zentralen Radmutter mit einer Sechskant-Mantelfläche ausgebildet sein. Ein im Bezugszustand dem Grundkörper näher liegender Deckelkörperabschnitt, etwa der oben genannte Anbringungsabschnitt, kann dann einen Übergang von der Sechskant-Mantelfläche zu einem axial benachbarten durchmessergrößeren kreisrunden oder kreiszylindrischen Mantelabschnitt bilden.

Weiter kann es gewünscht sein, den Blick von außen durch den Deckelkörper hindurch in den Aufnahmeraum freizugeben, sei es zur Inspektion des Funktionsbauteils, etwa wenn dieses Teil einer Reifendruck-Überwachungseinrichtung ist, oder sei es aus ästhetisch-werblichen Gründen, etwa wenn das Funktionsbauteil eine Pendelscheibe mit einem darauf vorgesehenen Logo oder Emblem ist, welche nicht mit der Radnabe mitdreht und somit auch am fahrenden Fahrzeug - etwa bei einem Überholvorgang - ohne Weiteres lesbar ist. Daher kann in Weiterbildung der vorliegenden Erfindung vorgesehen sein, dass der Deckelkörper wenigstens in einem Bereich des Deckelabschnitts durchsichtig ist. Bevorzugt ist der vollständige Deckelabschnitt durchsichtig, sodass der Deckelkörper wenigstens in einem den vollständigen Deckelabschnitt umfassenden Bereich durchsichtig sein kann. Ebenso kann daran gedacht sein, den vollständigen Deckelkörper durchsichtig auszubilden, um auch seitliche Einblicke durch den Schürzenabschnitt in den Aufnahmeraum zu gestatten. Hierzu kann der Deckelkörper teilweise oder vollständig aus durchsichtigem Kunststoff gebildet sein, beispielsweise aus PMMA. Es sind jedoch auch andere bekannte durchsichtige Kunststoffe zur Herstellung des Deckelkörpers einsetzbar.

Die oben genannten beispielhaften Funktionsbauteile können sich konstruktiv erheblich voneinander unterscheiden. Diese erheblichen Unterschiede in der konstruktiven Ausgestaltung der Funktionsbauteile können unterschiedliche Maßnahmen an dem Deckelkörper oder/und am Grundkörper erfordern, um diese Funktionsbauteile im Aufnahmeraum anzuordnen. Um diese Anordnung für eine Mehrzahl von unterschiedlich ausgestalteten Funktionsbauteilen an ein und demselben Ausgangs-Nabendeckel zu erleichtern, weist der Deckelkörper oder/und der Grundkörper erfindungsgemäß wenigstens eine Sollbruchstelle, besser noch eine Mehrzahl von Sollbruchstellen auf. Durch diese Sollbruchstellen kann die Herstellung eines oder mehrerer vorbestimmter Durchgänge durch den Deckelkörper oder/und den Grundkörper erleichtert werden, verglichen mit demselben Deckelkörper oder/und Grundkörper ohne Sollbruchstellen. Die Sollbruchstellen sind erfindungsgemäß als lokale Materialdünnstellen ausgebildet. Aufgrund lokal vorgesehener Dünnstellen als Sollbruchstellen kann, wie oben bereits erwähnt, die Wandstärke des Deckelkörpers oder/und des Grundkörpers auch in Umfangsrichtung lokal unterschiedlich sein. Die Sollbruchstellen sind erfindungsgemäß zur Heraustrennung von Materialformationen aus dem Deckelkörper oder/und dem Grundkörper ausgebildet.

Bevorzugt sind die Sollbruchstellen derart ausgebildet, dass sie eine Herstellung von Durchgängen ohne Verwendung von Werkzeug am Deckelkörper oder/und am Grundkörper ermöglichen. Eine oder mehrere Sollbruchstellen kann bzw. können hierzu zusätzlich zur Materialdünnstelle innerhalb der Materialdünnstelle mit einem auskragenden Zapfen zur Ausübung eines Ausbrechmomentes daran, um den Zapfen und damit zusammenhängendes Material aus der Sollbruchstelle herauszubrechen.

Beispielsweise kann der Deckelkörper wenigstens eine Sollbruchstelle im Deckelabschnitt aufweisen, um darin das oben genannte Nabenhodometer anordnen zu können, und zwar so, dass es ohne Weiteres von einer neben dem Fahrzeug mit der erfindungsgemäßen Nutzfahrzeug-Radnabe stehenden Person ablesbar ist. Daher ist die im Deckelabschnitt vorgesehene Sollbruchstelle vorzugsweise rotationssymmetrisch zur Deckelkörperachse, die dann Rotationssymmetrieachse der Sollbruchstelle ist.

Zusätzlich oder alternativ kann daran gedacht sein, in dem Schürzenabschnitt des Deckelkörpers wenigstens eine Sollbruchstelle auszubilden, um im Bedarfsfall beispielsweise eine den Reifendruck übertragende Leitung durch den Schürzenabschnitt hindurch in den Aufnahmeraum des Nabendeckels führen zu können. Als Reifendruck übertragende Leitung soll dabei eine druckführende Leitung ebenso gelten wie eine elektrische Leitung, die eine den Reifendruck repräsentierende Information als elektrisches oder elektronisches Signal codiert überträgt.

Auch der Grundkörper kann wenigstens eine Sollbruchstelle im Basisabschnitt aufweisen, etwa um einen Teil einer Reifendruck-Überwachungseinrichtung, beispielsweise wiederum eine einen Reifendruck übertragende Leitung, durch den Basisabschnitt hindurch axial in Richtung zur Fahrzeugmitte hin zu führen. Diese Sollbruchstelle ist daher bevorzugt rotationssymmetrisch zur Grundkörperachse ausgebildet, die dann Rotationssymmetrieachse für die Sollbruchstelle ist.

Zusätzlich oder alternativ kann auch für den Grundkörper daran gedacht sein, wenigstens eine Sollbruchstelle im Hülsenabschnitt auszubilden, falls beispielsweise eine einen Reifendruck übertragende Leitung nicht durch den Schürzenabschnitt, sondern durch den Hülsenabschnitt oder durch eine in beiden Körpern: Deckelkörper und Grundkörper, gemeinsam ausgebildete Durchgangsöffnung geführt werden soll.

Gemäß einer vorteilhaften Weiterbildung der vorliegenden Erfindung kann der Deckelkörper am Deckelabschnitt eine sich axial vom Deckelabschnitt weg erstreckende Rippenformation aufweisen. Diese Rippenformation dient vorzugsweise nicht nur der Versteifung des Deckelabschnitts und damit des Deckelkörpers insgesamt, sondern diese Rippenformation kann auch zur Fixierung eines Funktionsbauteils dienen, welches im Aufnahmeabschnitt des Nabendeckels angeordnet ist. Hierzu kann bevorzugt vorgesehen sein, dass die Rippenformation koaxial zur Deckelkörperachse und um diese umlaufend vorgesehen ist. Besonders bevorzugt läuft die Rippenformation geschlossen um die Deckelkörperachse um. Wenngleich die Rippenformation grundsätzlich auf jeder der beiden Seiten des Deckelabschnitts axial von diesem abstehen kann, ist es zur Vermeidung von axial nach außen am fahrbereiten Fahrzeug abstehenden Rippen und der von ihnen ausgehenden Verletzungsgefahr bevorzugt, wenn die Rippenformation vom Deckelabschnitt im Bezugszustand nur zum Grundkörper hin absteht.

Beispielsweise dann, wenn im Deckelabschnitt des Deckelkörpers ein Hodometer angeordnet ist, welches sich axial ausgehend vom Deckelabschnitt in den Aufnahmeraum hinein erstreckt, kann entweder die genannte Rippenformation eine eine Außenfläche des Nabenhodometers unmittelbar kontaktierende Halterung sein, oder die Rippenformation kann mit einem radialen Spalt zur radialen Außenfläche des Hodometers vorgesehen sein, wobei der radiale Spalt mit einer Gießmasse zur Fixierung des Hodometers im Deckelkörper ausgegossen werden kann bzw. ausgegossen sein kann. Daher befindet sich die Rippenformation bevorzugt radial außerhalb der oben genannten bezüglich der Deckelkörperachse rotationssymmetrischen Sollbruchstelle.

Ebenso ist es vorteilhaft, wenn der Grundkörper am Basisabschnitt eine sich axial vom Basisabschnitt weg erstreckende Lagerungsformation aufweist. Die Lagerungsformation kann eine weibliche Buchsenformation sein oder kann, beispielsweise dann, wenn sie der Realisierung einer Drehlagerung dient, eine männliche Dornformation sein. Bevorzugt ist die Lagerungsformation als Buchse ausgebildet. Bevorzugt erstreckt sich die Lagerungsformation auf der Sichtseite vom Basisabschnitt weg, also zum Deckelkörper hin. Diese Lagerungsformation kann zur Aufnahme einer Leitung verwendet werden, die Teil der oben genannten Reifendruck-Überwachungseinrichtung ist und beispielsweise einen Reifendruck eines an die Nutzfahrzeug-Radnabe anmontierten Reifens überträgt, oder die Lagerungsformation kann als Teil eines Drehlagers, insbesondere Gleitlagers oder einer Gleitlagerbaugruppe, zur relativ zum Nabendeckel drehbaren Lagerung einer Pendelscheibe dienen. Bevorzugt ist daher auch die Lagerungsformation koaxial zur Grundkörperachse angeordnet und läuft um diese um, besonders bevorzugt vollständig um.

Grundsätzlich können Deckelkörper und Grundkörper mit beliebigen Verbindungsmitteln miteinander verbunden sein. Beispielsweise können Deckelkörper und Grundkörper auch miteinander verklebt oder/und verschraubt werden bzw. sein. Besonders einfach und dennoch sicher ist der Deckelkörper jedoch mit dem Grundkörper verrastbar. Hierzu kann vorgesehen sein, dass ein Körper aus Deckelkörper und Grundkörper, vorzugsweise der Deckelkörper, zum jeweils anderen Körper hin vorstehende Rastzungen aufweist, und der jeweils andere Köper, vorzugsweise der Grundkörper, zur Bildung eines Rasteingriffs mit den Rastzungen wenigstens einen mit diesen wechselwirkenden Rastbereich aufweist, wobei an einer Formation aus Rastzungen und Rastbereich, vorzugsweise an den Rastzungen, Rastnasen vorgesehen sind, welche mit wenigstens einer Rastausnehmung an der jeweils anderen Formation, vorzugsweise an dem wenigstens einen Rastbereich, in formschlüssigem Eingriff stehen oder bringbar sind. Der Deckelkörper ist erfindungsgemäß relativ zum Grundkörper unverdrehbar mit diesem verbunden.

Anstelle einer Mehrzahl von Rastzungen kann der Deckelkörper eine umlaufende Wand aufweisen, an welcher Rastformationen, also wenigstens eine Rastausnehmung oder/und wenigstens eine Rastnase, vorgesehen sind. Bevorzugt ist wenigstens eine Rastnase an der Wand vorgesehen. Die Rastformationen tragende Wand kann im fertig montierten Zustand des Nabendeckels in den Hülsenabschnitt eintauchen, um den Deckelkörper auch gegen hohe radiale Lasten relativ zum Grundkörper abzusichern, wie sie beispielsweise auftreten, wenn eine Person auf den am Fahrzeug angebrachten Nabendeckel steigt, um kurzfristig eine erhöhte Position einzunehmen. Bevorzugt liegen sich ein Axialbereich des Hülsenabschnitts und ein Axialbereich der Rastformationen tragenden Wand radial am fertig montierten Nabendeckel gegenüber, wobei zur Erzielung eines möglichst stabilen Nabendeckels bevorzugt die axiale Abmessung des Überlapps von Hülsenabschnitt und Rastformationen tragender Wand größer ist als der axiale Abstand des freien Endes der Wand vom Basisabschnitt.

Um bei Einwirkung einer radialen Last auf den Deckelkörper eine radiale Verlagerung desselben relativ zum Grundkörper möglichst zu vermeiden, liegt die Rastformationen tragende Wand bevorzugt spaltfrei an einem nach radial innen weisenden Bereich des Hülsenabschnitts an, etwa in der Art einer Spielpassung, um die Wand mit geringen Montagekräften in den Hülsenabschnitt einführen zu können.

Die Rastformationen tragende Wand des Deckelkörpers kann ebenso wie die zuvor erwähnten Rastzungen Teil des Anbringungsabschnitts sein.

Bevorzugt ist die radiale Abmessung des Grundkörpers größer als die des Deckelkörpers. Bevorzugt schließt sich eine Außenfläche des Deckelkörpers an der Verbindungsstelle mit dem Grundkörper bündig an eine Außenfläche des Grundkörpers an. Hierzu kann ein Körper aus Deckelkörper und Grundkörper, vorzugsweise der Deckelkörper, eine konische Stützfläche aufweisen, welche im oben genannten Bezugszustand an einer negativ-konischen Gegenstützfläche des jeweils anderen Körpers aus Deckelkörper und Grundkörper in Anlage ist. Durch die Verwendung von konischen Stütz- und Gegenstützflächen kann eine Selbstzentrierung von Deckelkörper und Grundkörper bei der Verbindung dieser beiden Körper miteinander erreicht werden.

Auch der Grundkörper kann grundsätzlich mit beliebigen Verbindungsmitteln an der Radnabe befestigt werden. Schnell und sicher kann der Grundkörper dann mit der Nutzfahrzeug-Radnabe verbunden werden, wenn der Grundkörper auf dessen Montageseite zur Radnabe hin vorstehende Verrastungslaschen und die Radnabe zur Bildung eines Verrastungseingriffs mit den Verrastungslaschen wenigstens eine mit diesen wechselwirkende Verrastungszone aufweist, wobei an einer Formation aus Verrastungslaschen und Verrastungszone, vorzugsweise an den Verrastungslaschen, Rastvorsprünge vorgesehen sind, welche mit wenigstens einer Rastaussparung an der jeweils anderen Formation, vorzugsweise an der wenigstens einen Verrastungszone, in formschlüssigem Eingriff stehen oder in einen solchen bringbar sind. Die Verrastungslaschen können in vorteilhafter Weise von dem Hülsenabschnitt axial abstehen. Somit ist nicht nur der Nabendeckel bevorzugt durch Rasteingriff von Deckelkörper und Grundkörper miteinander herstellbar, sondern ist der Nabendeckel oder der Grundkörper ebenfalls durch Verrastung mit der Radnabe verbindbar. Die Rastzungen sind ebenso wie die Verrastungslaschen bevorzugt in radialer Richtung bezogen auf die Nabendeckelachse im Bezugszustand federnd am jeweiligen Körper vorgesehen.

Dann, wenn das Funktionsbauteil eine um eine mit der Nabendeckelachse kollineare Pendelachse relativ zum Nabendeckel drehbare Pendelscheibe ist, ist es vorteilhaft, wenn eine zur Betrachtung durch den Deckelabschnitt hindurch vorgesehene Seite der Pendelscheibe mit möglichst geringem Abstand von dem Deckelabschnitt angeordnet ist. Dies ist konstruktiv dadurch möglich, dass die Pendelscheibe auf ihrer im fertig montierten Zustand dem Basisabschnitt zugewandten Seite eine von der Pendelscheibe axial weg auskragende Lagerformation, insbesondere Lagerbuchse, aufweist.

Durch die Lagerformation kann - insbesondere im Zusammenwirken mit der oben bevorzugt genannten Lagerungsformation am Basisabschnitt des Grundkörpers - eine ausreichende axiale Beabstandung der Pendelscheibe vom Basisabschnitt und damit eine axiale Annäherung der Pendelscheibe an den Deckelabschnitt erreicht werden. Zugleich kann so die axiale Länge der Drehlagerung der Pendelscheibe vergrößert werden, was zu einer zuverlässigen spielfreien relativ zum Nabendeckel drehbaren Lagerung der Pendelscheibe führt.

Bevorzugt weist die Pendelscheibe auf ihrer im fertig montierten Zustand dem Basisabschnitt zugewandten Seite radial außerhalb der Lagerformation einen von der Pendelscheibe axial weg auskragenden Mantelabschnitt auf. Dieser kann im Bezugszustand dem Schürzenabschnitt radial gegenüber liegen, sodass auch ein durch den Schürzenabschnitt hindurch blickender Passant auf einen Abschnitt der Pendelscheibe blicken kann. Der Mantelabschnitt kann daher auf seiner radial nach außen weisenden Seite mit Informationen versehen sein.

Die Lagerformation kann als weibliche Lagerbuchse oder als männlicher Lagerdorn ausgebildet sein.

Bevorzugt kragt der Mantelabschnitt vom radialen Außenrand der Pendelscheibe aus, sodass er mit radial geringem Abstand dem Schürzenabschnitt gegenüber liegen kann.

Die vorliegende Anmeldung betrifft auch den oben beschriebenen wenigstens zweiteiligen Nabendeckel mit Grundkörper und Deckelkörper für sich alleine genommen. Dieser kann in der oben beschriebenen Weise weitergebildet sein. Die Nabendeckelachse tritt dann an die Stelle der Nabendrehachse in der obigen Beschreibung.

Der Nabendeckel kann auch vorteilhaft an einer Mittenausnehmung einer Radfelge angeordnet oder anordenbar sein, so dass die vorliegende Anmeldung auch eine um eine virtuelle Felgendrehachse drehbare Radfelge mit einer von der virtuellen Felgendrehachse durchsetzten Mittenausnehmung betreffen kann, welche durch einen mit der Felge verbundenen Nabendeckel abgedeckt ist, der wie oben beschrieben ausgestaltet ist. Die Felgendrehachse tritt dann an die Stelle der Nabendrehachse in der obigen Beschreibung.

Die vorliegende Erfindung wird nachfolgend anhand der beiliegenden Zeichnungen näher erläutert werden. Es stellt dar:

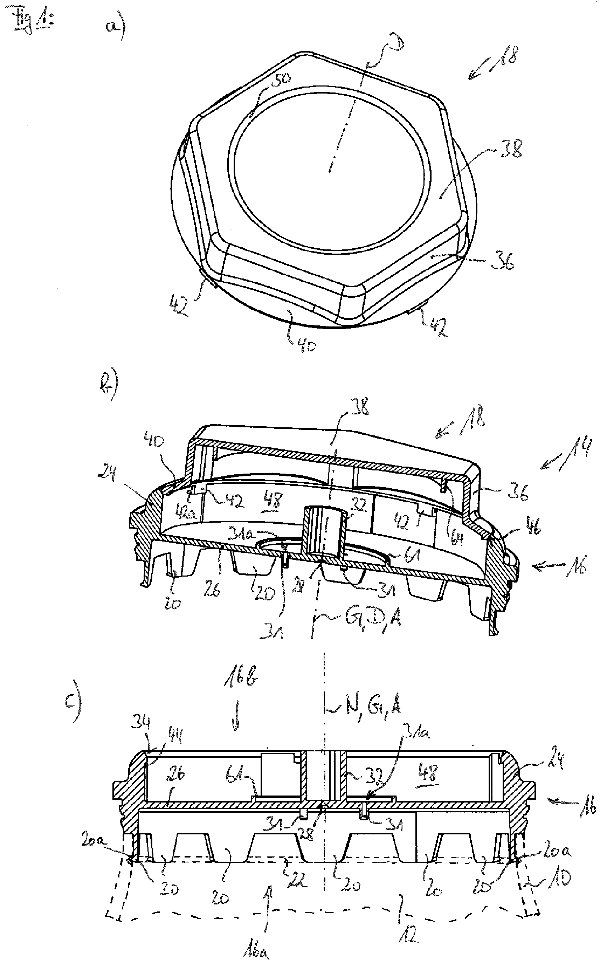

- Figur 1: eine erfindungsgemäße Ausführung einer Nutzfahrzeug-Radnabe mit einem Nabendeckel ohne darin aufgenommenes Funktionsbauteil, wobei Figur 1a den Deckelkörper in perspektivischer Draufsicht, Figur 1b den Nabendeckel in perspektivischer Längsschnittdarstellung und Figur 1c den an der Nutzfahrzeug-Radnabe angeordneten Grundkörper im Längsschnitt zeigt;

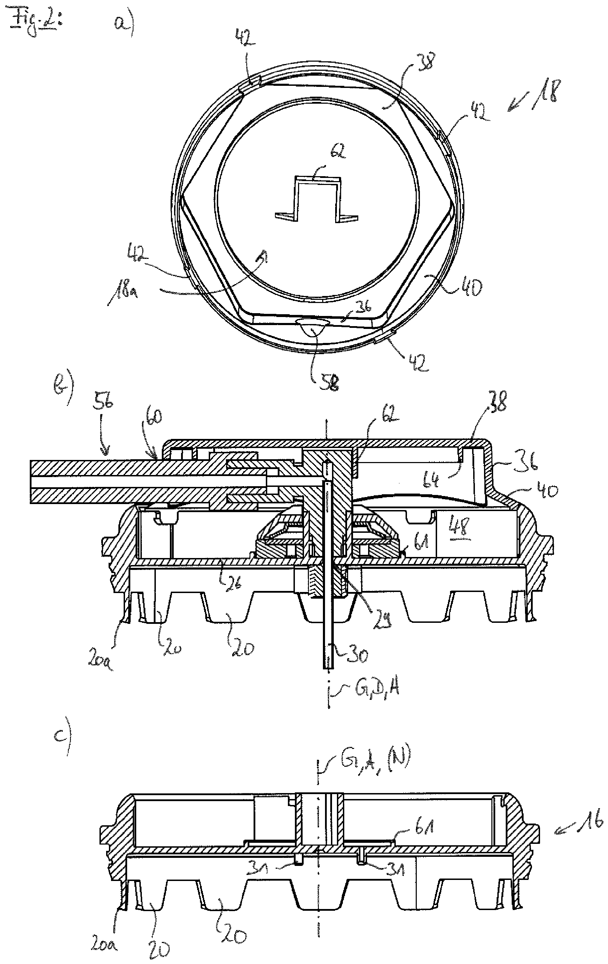

- Figur 2: den Nabendeckel von Figur 1 mit darin aufgenommenem Funktionsbauteil in Form einer Reifendruck-Überwachungseinrichtung, wobei Figur 2a den Deckelkörper in perspektivischer Unteransicht, Figur 2b den Nabendeckel im Längsschnitt mit darin angeordneter Reifendruck-Überwachungseinrichtung und Figur 2c den Grundkörper im Längsschnitt zeigt;

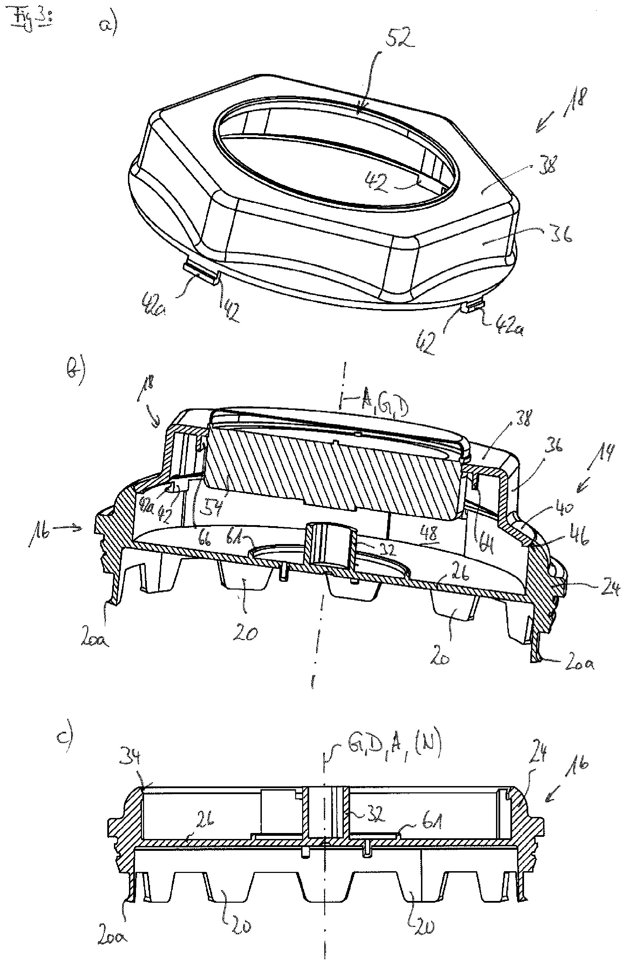

- Figur 3: den Nabendeckel von Figur 2 mit einem Nabenhodometer als im Nabendeckel aufgenommenes Funktionsbauteil, wobei Figur 3a den Deckelkörper in perspektivischer Draufsicht, Figur 3b den Nabendeckel in perspektivischer Längsschnittansicht und Figur 3c den Grundkörper in Längsschnittansicht zeigt;

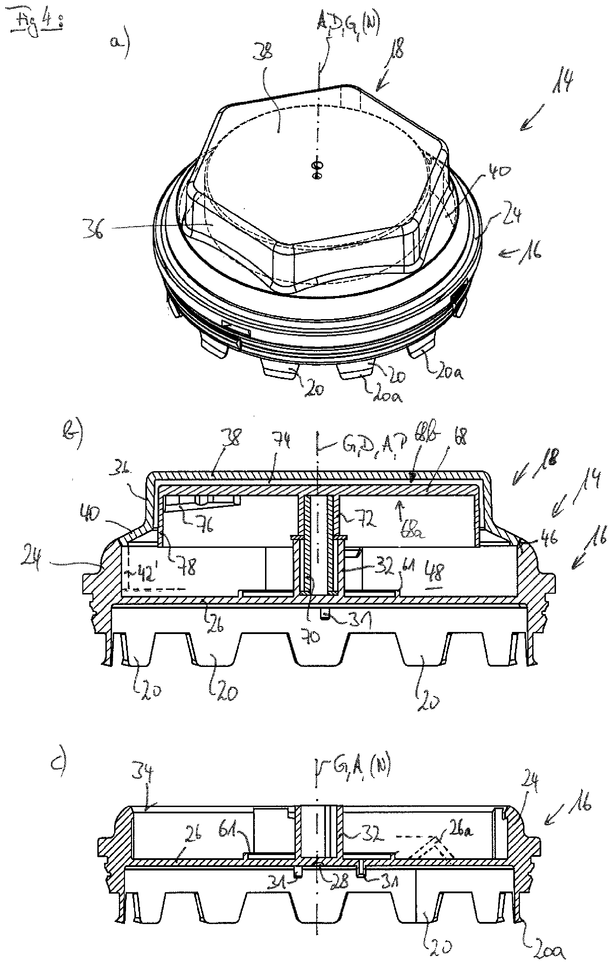

- Figur 4: den Nabendeckel mit einer Pendelscheibe als darin aufgenommenes Funktionsbauteil, wobei Figur 4a eine perspektivische Außenansicht des Nabendeckels, Figur 4b eine Längsschnittansicht durch den Nabendeckel und Figur 4c eine Längsschnittansicht durch den Grundkörper des Nabendeckels zeigt.

In Figur 1c ist eine lediglich strichliniert angedeutete Radnabe, von welcher nur der axiale fahrzeugfernere Endabschnitt dargestellt ist, allgemein mit 10 bezeichnet. Die an sich bekannte Radnabe weist eine Mittenausnehmung 12 auf, die von einem in Figur 1b mit Bezugszeichen 14 bezeichneten Nabendeckel abgedeckt ist. Der Nabendeckel 14 weist einen Grundkörper 16 und einen gesondert von diesem ausgebildeten Deckelkörper 18 auf.

In Figur 1c ist gezeigt, wie der Grundkörper 16 mit einem axialen Längsende der Radnabe 10 verbunden ist.

Die Radnabe 10 ist in an sich bekannter Weise an einem in den Figuren 1 bis 4 nicht dargestellten Achszapfen einer Nutzfahrzeug-Achse um die Nabendrehachse N drehbar angebracht. Die Nutzfahrzeug-Radnabe dient zur Aufnahme eines Nutzfahrzeug-Rades, um dieses drehbar an der in den Figuren nicht dargestellten Fahrzeugachse zu befestigen.

Der Grundkörper 16 weist eine Montageseite 16a auf, welche in dem in Figur 1c montierten Zustand zur Radnabe 10 hinweist und weist eine der Montageseite 16a entgegengesetzte Sichtseite 16b auf, welche in dem in Figur 1c gezeigten montierten Zustand von der Radnabe 10 weg weist.

Zur Verbindung des Nabendeckels 14 mit der Radnabe 10 kann der Grundkörper 16 auf der Montageseite 16a in axialer Richtung abstehende Verrastungslaschen 20 aufweisen, welche vorzugsweise äquidistant in Umfangsrichtung voneinander beabstandet sind und in radialer Richtung bezogen auf die Nabendrehachse N federnd am Grundkörper 16 vorgesehen sind.

Auf ihren radial nach außen weisenden Seiten können die Verrastungslaschen 20 radial in Richtung von der Nabendrehachse N weg vorstehende Rastvorsprünge 20a aufweisen, welche in eine an entsprechender axialer Stelle in die zur Nabendrehachse N hinweisende Innenseite ausgebildete umlaufende Rastaussparung 22 eingreifen können und so einen formschlüssigen Verrastungseingriff mit der Radnabe 10 bilden können. Die Rastaussparung 22 bildet somit eine mit den Verrastungslaschen 20 zusammenwirkende Verrastungszone der Radnabe 10.

Der Grundkörper 16 kann beispielsweise einen sich axial längs der Nabendrehachse N erstreckenden ringförmigen Hülsenabschnitt 24 aufweisen, welcher um die Nabendrehachse N vollständig umläuft, wobei die Nabendrehachse N mit wenigen asymmetrischen Ausnahmen eine Rotationssymmetrieachse für den Grundkörper 16 bildet. Der Grundkörper 16 erstreckt sich daher axial längs einer Grundkörperachse G, welche im fertig an die Radnabe 10 montierten Zustand des Grundkörpers mit der Nabendrehachse N zusammenfällt, sodass alle hier für die Nabendrehachse getroffenen Aussagen mit Bezug auf den Grundkörper 16 auch für die Grundkörperachse G gelten, und umgekehrt. Der ringförmige Hülsenabschnitt 24, welcher in axialer Richtung lokal unterschiedliche Wandstärken aufweisen kann, weist zur möglichen Aufnahme eines Funktionsbauteils einen Basisabschnitt 26 auf, welcher sich vom Hülsenabschnitt 24 nach radial innen zur Nabendrehachse N bzw. zur Grundkörperachse G hin erstreckt. Im vorliegenden bevorzugten Beispiel ist der Basisabschnitt 26 als durchgehende Trennwand ausgebildet, welche den vom Hülsenabschnitt 24 umfassten Innenraum in zwei durch den Basisabschnitt 26 baulich voneinander getrennte axiale Abschnitte unterteilt. Der Basisabschnitt 26 kann orthogonal zur Grundkörperachse G verlaufen, wie dies in Figur 1c dargestellt ist.

Die Verrastungslaschen 20 können sich axial zur Montageseite 16a hin vom Hülsenabschnitt 24 weg erstrecken.

Anstelle des in Figur 1c gezeigten vollflächigen Basisabschnitts 26 kann dieser abschnittsweise bezogen auf die Nabendrehachse N bzw. die Grundkörperachse G radiale Streben aufweisen oder kann in der Mitte eine den Basisabschnitt 26 durchsetzende Ausnehmung aufweisen, sodass der Basisabschnitt 26 sich nur vom Hülsenabschnitt 24 nach radial innen bis zu einer mit Abstand von der Grundkörperachse G gelegenen Stelle erstrecken kann.

In der von der Grundkörperachse durchsetzten Mitte weist der Basisabschnitt 26 eine erste Sollbruchstelle 28 auf, welche als Materialdünnstelle ausgebildet ist. Diese erste Sollbruchstelle 28 kann zur Herstellung einer den Basisabschnitt 26 zentral durchsetzenden Öffnung 29 dienen, welche von einer einen Reifendruck übertragenden Leitung 30 (siehe Figur 2b) durchsetzt sein kann.

Ebenso sind in Figur 1b und 1c vom Basisabschnitt 26 axial auskragende Zapfen 31 an Sollbruchstellen 31a gezeigt. Auf die beispielhaft als Hohlzapfen ausgebildeten Zapfen 31 kann ein Ausbrechmoment ausgeübt werden, um die Zapfen 31 aus dem Basisabschnitt 26 auszubrechen und dadurch Durchgänge im Basisabschnitt 26 zu schaffen. Anstelle der Verwendung von Hohlzapfen als Materialdünnstelle können die Zapfen 31 massiv ausgebildet sein und von einer Materialdünnstelle im Basisabschnitt 26 umgeben sein.

Auf der Sichtseite 16b weist der Basisabschnitt 26 eine axial von ihm abstehende Lagerungsformation 32 auf, welche im dargestellten Beispiel als Buchse ausgebildet ist und welche ebenfalls der Aufnahme von Bauteilen oder Bauteilabschnitten von Funktionsbauteilen am Nabendeckel 14 dienen kann. Dies wird weiter unten noch ausführlicher anhand der in den Figuren dargestellten weiteren Ausführungsbeispiele dargelegt werden.

An seinem sichtseitigen axialen Ende weist der Grundkörper 16 eine negativ-konische Anlagefläche bzw. Gegenstützfläche 34 auf, an welche sich der Deckelkörper 18 abstützen kann.

Der Deckelkörper 18 weist in den ihn darstellenden Figuren 1a und 1b einen ringförmigen Schürzenabschnitt 36 und einen den ringförmigen Schürzenabschnitt 36 an seinem bestimmungsgemäß vom Hülsenabschnitt 24 fernliegenden axialen Längsende vollständig abschließenden Deckelabschnitt 38 auf. Der Schürzenabschnitt 36 weist im Gegensatz zum Hülsenabschnitt 24 keine kreisringförmige Gestalt auf, sondern ist als Sechskant-Ring ausgestaltet, welcher sich um eine Deckelkörperachse D als Mittelachse herum erstreckt. Die Deckelkörperachse D fällt dann, wenn der Deckelkörper 18 mit dem Grundkörper 16 verbunden ist, mit der Grundkörperachse G zusammen und bildet so eine gemeinsame Nabendeckelachse A. Dann, wenn der vollständige Nabendeckel 14 an die Radnabe 10 angebracht ist, sind Nabendrehachse N, Grundkörperachse G, Deckelkörperachse D und Nabendeckelachse A kollinear.

Der Nabendeckel 14 erhält durch den sechskantig ausgebildeten Schürzenabschnitt 36 des Deckelkörpers 18 die Anmutung einer Sechskantmutter, wie sie aus früheren Zeiten als Zentralmutter an Fahrzeugachsen bekannt war.

Auf der dem Deckelabschnitt 38 gegenüberliegenden Seite des Schürzenabschnitts 36 weist der Deckelkörper 18 einen Körperabschnitt 40 auf, welcher sich im Vergleich zum Schürzenabschnitt 36 nicht nur axial, sondern auch radial, vorzugsweise überwiegend radial, erstreckt. Dieser Körperabschnitt 40 dient als Anbringungsabschnitt 40 des Deckelkörpers 18, da an ihm Verbindungsmittel ausgebildet sein können, welche der Festlegung des Deckelkörpers 18 am Grundkörper 16 dienen.

Im dargestellten Beispiel weist der Körperabschnitt oder Anbringungsabschnitt 40 des Deckelkörpers 18 zum Grundkörper 16 hin axial vorstehende Rastzungen 42 auf, welche radial federnd am Anbringungsabschnitt 40 vorgesehen sind und welche auf ihrer nach radial außen weisenden Seite Rastnasen 42a aufweisen, die in entsprechende Rastausnehmungen 44 am Hülsenabschnitt in formschlüssigen Rasteingriff treten können.

Zur effektiven und einfachen Zentrierung des Deckelkörpers 18 am Grundkörper 16 weist der Körperabschnitt 40 an seinem dem Hülsenabschnitt 24 des Grundkörpers 16 nächstgelegenen Rand eine konische Außenfläche bzw. Stützfläche 46 auf, welche dann, wenn der Deckelkörper 18 am Grundkörper 16 angebracht ist, an der negativ-konischen Anlagefläche 34 des Hülsenabschnitts 24 in Anlage ist.

Der Körper- bzw. Anbringungsabschnitt 40 dient außerdem dazu, einen Übergang von dem Sechskant-ringförmigen Schürzenabschnitt 36 zum kreisringförmigen Hülsenabschnitt 24 zu bilden.

Dann, wenn der Deckelkörper 18, wie in Figur 1b dargestellt, am Grundkörper 16 angebracht ist, begrenzen an dem so gebildeten Nabendeckel 14 der Basisabschnitt 26, der Deckelabschnitt 38, der Schürzenabschnitt 36, der Anbringungsabschnitt 40 und der Hülsenabschnitt 24 einen Aufnahmeraum 48 im Inneren des Nabendeckels 14. Wie weiter unten noch ausführlich erläutert werden wird, kann der Aufnahmeraum 48 zur Aufnahme unterschiedlicher Funktionseinheiten an dem Nabendeckel 14 genutzt werden.

Der Deckelabschnitt 28 weist, wie in Figur 1a, nicht jedoch in Figur 1b, dargestellt ist, eine Sollbruchstelle 50 auf, welche um die Deckelkörperachse D kreisförmig umläuft. Die Sollbruchstelle 50 im Deckelabschnitt 38 dient der Heraustrennung eines kreisförmigen Teils des Deckelabschnitts 38 zur Bildung einer den Deckelabschnitt 38 zentral durchsetzenden Öffnung 52 (siehe Figur 3a), um darin ein Funktionsbauteil in Form eines Nabenhodometers 54 anzuordnen (siehe Figur 3b).

In den Figuren 2a bis 2c sind derselbe Grundkörper 16 und derselbe Deckelkörper 18 wie in den Figuren 1a bis 1c dargestellt. Zur Erläuterung dieser Bauteile in den Figuren 2a bis 2c wird daher auf die Beschreibung der Figuren 1a und 1c verwiesen.

In Figur 2c ist die Nutzfahrzeug-Radnabe 10 nicht mehr dargestellt. Jedoch ist dem Fachmann ohne Weiteres klar, dass der gleiche Grundkörper 16 in identischer Weise wie in Figur 1c dargestellt an einer Radnabe 10 angeordnet sein kann.

In Figur 2b ist dargestellt, wie im Aufnahmeraum 48 eine an sich bekannte Reifendruck-Überwachungseinrichtung 56 als ein Funktionsbauteil oder eine Funktionsbaugruppe aufgenommen sein kann. Hierzu ist für eine einen Reifendruck eines an die jeweilige Radnabe anmontierten Reifens übertragende Leitung 30 der bereits beschriebene Durchbruch 29 an der Sollbruchstelle 28 des Basisabschnitts 26 geschaffen. Abweichend von der Darstellung in Fig. 2b kann die Sollbruchstelle 28 radial so groß ausgebildet sein, dass bei Bildung des Durchbruchs 29 zusammen mit einem zentralen Bereich des Basisabschnitts 26 die Lagerungsformation 32 entfernt wird.

Die Reifendruck-Überwachungseinrichtung 56 ist an sich bekannter Weise ausgeführt und wird deshalb hier nicht näher beschrieben werden.

Es sei lediglich angemerkt, dass teilweise im Schürzenabschnitt 36 und teilweise im Anbringungsabschnitt 40 eine Sollbruchstelle 58 ausgebildet sein kann, welche zur Bildung eines Durchbruchs 60 vorgesehen sein kann, durch die ein zu dem zu drucküberwachenden Reifen führender Druckschlauch aus dem Aufnahmeraum 48 heraus hindurchgeführt sein kann.

Ein bevorzugt axial umlaufender Axialvorsprung 61 am Basisabschnitt 26 bildet eine radiale Abstützung eines Teils der Reifendruck-Überwachungseinrichtung 56.

Auf der im fertig montierten Zustand zum Grundkörper 16 hinweisenden Anbringungsseite 18a des Deckelkörpers 18, auf die der Betrachter in Figur 2a blickt, kann eine Stützformation 62 axial abragen, welche - wie in Figur 2b gezeigt ist - der Stützung eines Teils der Reifendruck-Überwachungseinrichtung dienen kann, beispielsweise um die Zentrizität der Druck übertragenden Leitung 30 zu sichern. Die Stützformation 62 kann C-förmige Gestalt aufweisen.

In Figur 3, insbesondere in Figur 3b, ist der Nabendeckel 14 von Figur 1b mit einem im Deckelkörper 18, genauer im Deckelabschnitt 38 desselben, aufgenommenen Nabenhodometer dargestellt. Hierzu ist, wie bereits beschrieben, ein kreisförmiger Durchbruch 52 im Deckelabschnitt 38 geschaffen worden, um das Nabenhodometer unmittelbar im Deckelkörper 18 aufnehmen zu können.

Der Deckelabschnitt 38 weist auf der Anbringungsseite 18a des Deckelkörpers 18 bevorzugt eine ringförmig um die Deckelkörperachse D umlaufende Rippenformation 64 auf, welche mit radialem Abstand vom Hodometer 54 um den radial äußeren deckelkörperfesten Teil desselben umläuft. Zwischen dem Hodometer 54 und der Rippenformation 64 ist somit ein Ringspalt 66 gebildet, welcher mit Gussmasse ausgegossen werden kann, um das Hodometer 54 besonders sicher am Deckelkörper 18 festzulegen.

Ein radial innerer Teil des Hodometers 54 dreht während des Fahrbetriebs eines mit dem Nabendeckel 14 ausgerüsteten Fahrzeugs mit diesem nicht mit, sodass der radial innere Teil aufgrund der Relativbewegung zu dem mit dem Nabendeckel 14 mitbewegten radial äußeren Teil des Hodometers 54 eine Laufleistung des dem Nabendeckel 14 am jeweiligen Fahrzeug zugeordneten Rades registrieren kann.

In Figur 4 ist in dem Aufnahmeraum 48 eine Pendelscheibe 68 als Funktionsbauteil aufgenommen. Die Pendelscheibe 68 ist hierzu bevorzugt drehbar in der Lagerungsformation 32 des Basisabschnitts 26 des Grundkörpers 16 aufgenommen. Hierzu kann in der Lagerungsformation 32 eine Lageranordnung 70 aufgenommen sein, welche sich in eine als Lagerbuchse ausgebildete Lagerformation 72 hinein erstreckt, die in axialer Richtung von der Pendelscheibe 68 auf deren dem Basisabschnitt 26 zugewandten Seite 68a auskragt. Durch das Zusammenwirken von axial aufeinander zu auskragenden Formationen, Lagerungsformation 32 und Lagerbuchse 72, kann die Pendelscheibe 68 axial sehr nah an den Deckelabschnitt 38 angenähert werden, sodass zwischen dem Deckelabschnitt 38 und der Pendelscheibe 68 nur ein geringer Axialspalt 74 besteht.

Die Pendelscheibe 74 ist exzentrisch mit einem Gewicht 76 versehen, welches bei der üblichen horizontalen Anordnung der Nabendeckelachse A ein Drehmoment um die mit der Nabendrehachse A oder auch der Grundkörperachse G vorteilhafterweise zusammenfallende Pendelachse P bewirkt, welches die Pendelscheibe 68 in eine definierte Drehstellung relativ zum Nabendeckel 14 stellt. Durch das Drehlager 70 behält die Pendelscheibe 68 auch im Fahrbetrieb ihre Stellung bei und dreht nicht mit dem mit der Radnabe 10 mitdrehenden Nabendeckel 14 mit.

Damit die Pendelscheibe 68 von außerhalb des den Nabendeckel 14 bzw. die Radnabe 10 mit Nabendeckel 14 tragenden Fahrzeugs erkennbar ist, kann der Deckelkörper 18 aus transparentem Material, beispielsweise aus transparentem Kunststoff, gebildet sein. Die axiale Annäherung der Pendelscheibe 68 an den Deckelabschnitt 38 sorgt für eine gute Erkennbarkeit der Pendelscheibe 68 hinter dem durchsichtigen Kunststoff des Deckelkörpers 18, sodass Information auf der vom Grundkörper 16 weg weisenden Seite 68b der Pendelscheibe 68 durch den Deckelabschnitt 38 hindurch gut lesbar ist.

Die Pendelscheibe 68 kann radial von der Lagerbuchse 72 entfernt, vorzugsweise an ihrem radial äußersten Rand, einen zum Basisabschnitt 26 hin auskragenden Mantelabschnitt 78 aufweisen, welcher durch den vorzugsweise ebenfalls transparenten Schürzenabschnitt 36 des Deckelkörpers 18 hindurch erkennbar sein kann.

Wie oben dargelegt wurde, kann ein und derselbe Nabendeckel 14 ohne Funktionsbauteil oder mit unterschiedlichen Funktionsbauteilen an einem Fahrzeug vorgesehen werden. Unabhängig von der Funktionsausrüstung des Nabendeckels 14 reicht es jedoch aus, nur ein und denselben Grundkörper 16 und ein und denselben Deckelkörper 18 zu bevorraten und für die Montage am Fahrzeug bereitzustellen.

In Fig. 4b ist strichliniert auf der linken Seite des Deckelkörpers 18 eine Wand 42' dargestellt, die die Rastnasen 42a statt der Rastzungen 42 tragen kann. Die Wand 42' taucht in den Hülsenabschnitt 24 des Grundkörpers 16 ein und liegt einem Wandbereich des Hülsenabschnitts 24 radial gegenüber, vorzugsweise spaltfrei gegenüber. Die vorzugsweise geschlossen umlaufende Wand 42' ist dem Basisabschnitt 26 möglichst nah angenähert, um so einen möglichst steifen mehrteiligen Nabendeckel 14 zu erhalten.

In Fig. 4c ist in der rechten Hälfte des Grundkörpers strichliniert eine axiale Ausstülpung 26a des Basisabschnitts 26 angedeutet, die vollständig um die Grundkörperachse G umlaufend vorgesehen sein kann, um den Basisabschnitt 26 auszusteifen.

## Patentansprüche

1. Nutzfahrzeug-Radnabe (10), welche um eine virtuelle Nabendrehachse (N) drehbar ist, mit einer von der virtuellen Nabendrehachse (N) durchsetzten Mittenausnehmung (12), welche durch einen mit der Radnabe (10) verbundenen Nabendeckel (14) abgedeckt ist,
wobei der Nabendeckel (14) wenigstens zweiteilig ausgebildet ist und einen Grundkörper (16) sowie einen gesondert vom Grundkörper (16) ausgebildeten und relativ zum Grundkörper (16) unverdrehbar mit dem Grundkörper (16) verbundenen Deckelkörper (18) aufweist, wobei der Grundkörper (16) eine Montageseite (16a) und eine der Montageseite (16a) entgegengesetzte Sichtseite (16b) aufweist, wobei der Grundkörper (16) auf der Montageseite (16a) mit der Radnabe (10) verbunden oder verbindbar ist und auf der der Sichtseite (16b) mit einem Anbringungsabschnitt (40) des Deckelkörpers (18) verbunden oder verbindbar ist, wobei zwischen dem Deckelkörper (18) und dem Grundkörper (16) ein Aufnahmeraum (48) gebildet ist, **dadurch gekennzeichnet dass** wenigstens ein Körper (16, 18) aus Deckelkörper (18) und Grundkörper (16) eine Mehrzahl von Sollbruchstellen (28, 50, 58) aufweist, welche als lokale Materialdünnstellen zur Heraustrennung von Materialformationen aus dem wenigstens einen Körper (16, 18) ausgebildet sind, um die Herstellung vorbestimmter Durchgänge (29, 52, 60) durch den wenigstens einen Körper (16, 18) aus Deckelkörper (18) und Grundkörper (16) zu erleichtern.

2. Nutzfahrzeug-Radnabe (10) nach Anspruch 1,
**dadurch gekennzeichnet, dass** der Grundkörper (16) einen sich längs einer Grundkörperachse (G) erstreckenden ringförmigen Hülsenabschnitt (24) und einen vom Hülsenabschnitt (24) nach radial innen vorstehenden, bevorzugt den Hülsenabschnitt (24) radial innen überspannenden, Basisabschnitt (26) aufweist.

3. Nutzfahrzeug-Radnabe (10) nach Anspruch 1 oder 2,
**dadurch gekennzeichnet, dass** Deckelkörper (18) einen sich längs einer Deckelkörperachse (D) erstreckenden ringförmigen Schürzenabschnitt (36) und einen den Schürzenabschnitt (36) radial innen überspannenden Deckelabschnitt (38) aufweist.

4. Nutzfahrzeug-Radnabe (10) nach den Ansprüchen 2 und 3,
**dadurch gekennzeichnet, dass** - in einem Bezugszustand mit bestimmungsgemäß mit dem Grundkörper (16) verbundenen Deckelkörper (18) - die Grundkörperachse (G) und die Deckelkörperachse (D) als kollineare Achsen eine Nabendeckelachse (A) bilden, wobei der Deckelabschnitt (38) bezogen auf die Nabendeckelachse (A) mit axialem Abstand vom Basisabschnitt (26) angeordnet ist.

5. Nutzfahrzeug-Radnabe (10) nach Anspruch 4,
**dadurch gekennzeichnet, dass** zwischen dem Deckelkörper (18) und dem Grundkörper (16) ein Aufnahmeraum (48) gebildet ist, welcher bevorzugt in axialer Richtung durch den Deckelabschnitt (38) und den Basisabschnitt (26) und in radialer Richtung durch den Hülsenabschnitt (24) oder/und durch den Schürzenabschnitt (36) oder/und durch den Anbringungsabschnitt (40) begrenzt ist.

6. Nutzfahrzeug-Radnabe (10) nach Anspruch 5,
**dadurch gekennzeichnet, dass** in dem Aufnahmeraum (48) ein Funktionsbauteil (54, 56, 60) angeordnet ist, wie etwa ein Nabenhodometer (54), eine Pendelscheibe (68) oder eine Druckübertragungsleitung (30), beispielsweise als Teil einer Reifendruck-Überwachungseinrichtung (56).

7. Nutzfahrzeug-Radnabe (10) nach einem der vorhergehenden Ansprüche,
**dadurch gekennzeichnet, dass** der Deckelkörper (18) wenigstens in einem Bereich des Deckelabschnitts (38) durchsichtig ist, wobei bevorzugt wenigstens der gesamte Deckelabschnitt (38) durchsichtig ist, wobei besonders bevorzugt der gesamte Deckelkörper (18) durchsichtig ist.

8. Nutzfahrzeug-Radnabe (10) nach einem der vorhergehenden Ansprüche,
**dadurch gekennzeichnet, dass** die Sollbruchstellen dazu ausgebildet sind, um die Herstellung vorbestimmter Durchgänge (29, 52, 58) ohne Verwendung von Werkzeug zu ermöglichen.

9. Nutzfahrzeug-Radnabe (10) nach einem der vorhergehenden Ansprüche,
**dadurch gekennzeichnet, dass** der Deckelkörper (18) wenigstens eine Sollbruchstelle (50) im Deckelabschnitt (38) aufweist, welche vorzugsweise rotationssymmetrisch zur Deckelkörperachse (D) als der Rotationssymmetrieachse ist, oder/und dass der Deckelkörper (18) wenigstens eine Sollbruchstelle (58) im Schürzenabschnitt (36) aufweist.

10. Nutzfahrzeug-Radnabe (10) nach einem der vorhergehenden Ansprüche,
**dadurch gekennzeichnet, dass** der Grundkörper (16) wenigstens eine Sollbruchstelle (28) im Basisabschnitt (26) aufweist, welche vorzugsweise rotationssymmetrisch zur Grundkörperachse (G) als der Rotationssymmetrieachse ist, oder/und dass der Grundkörper (16) wenigstens eine Sollbruchstelle im Hülsenabschnitt (24) aufweist.

11. Nutzfahrzeug-Radnabe (10) nach einem der vorhergehenden Ansprüche,
**dadurch gekennzeichnet, dass** der Deckelkörper (18) am Deckelabschnitt (38) eine sich axial vom Deckelabschnitt (38) weg erstreckende Rippenformation (64) aufweist, welche vorzugsweise koaxial zur Deckelkörperachse (D) um diese umlaufend vorgesehen ist.

12. Nutzfahrzeug-Radnabe (10) nach einem der vorhergehenden Ansprüche,
**dadurch gekennzeichnet, dass** der Grundkörper (16) am Basisabschnitt (26) eine sich axial vom Basisabschnitt (26) weg erstreckende Lagerungsformation (32) aufweist, welche vorzugsweise koaxial zur Grundkörperachse (G) um diese umlaufend vorgesehen ist.

13. Nutzfahrzeug-Radnabe (10) nach einem der vorhergehenden Ansprüche,
**dadurch gekennzeichnet, dass** ein Körper aus Deckelkörper (18) und Grundkörper (16), vorzugsweise der Deckelkörper (18), zum jeweils anderen Körper hin vorstehende Rastzungen (42) aufweist, und der jeweils andere Körper, vorzugsweise der Grundkörper (16), zur Bildung eines Rasteingriffs mit den Rastzungen (42) wenigstens einen mit diesen wechselwirkenden Rastbereich (44) aufweist, wobei an einer Formation aus Rastzungen (42) und Rastbereich (44), vorzugsweise an den Rastzungen (42), Rastnasen (42a) vorgesehen sind, welche mit wenigstens einer Rastausnehmung an der jeweils anderen Formation, vorzugsweise an dem wenigstens einen Rastbereich (44), in formschlüssigem Eingriff stehen oder bringbar sind.

14. Nutzfahrzeug-Radnabe (10) nach einem der vorhergehenden Ansprüche,
**dadurch gekennzeichnet, dass** der Grundkörper (16) auf dessen Montageseite (16a) zur Radnabe (10) hin vorstehende Verrastungslaschen (20) und die Radnabe (10) zur Bildung eines Verrastungseingriffs mit den Verrastungslaschen (20) wenigstens eine mit diesen wechselwirkende Verrastungszone (22) aufweist, wobei an einer Formation aus Verrastungslaschen (20) und Verrastungszone (22), vorzugsweise an den Verrastungslaschen (20), Rastvorsprünge (20a) vorgesehen sind, welche mit Rastaussparungen (22) an der jeweils anderen Formation, vorzugsweise an der wenigstens einen Verrastungszone (22), in formschlüssigem Eingriff stehen oder bringbar sind.

15. Nutzfahrzeug-Radnabe (10) nach einem der vorhergehenden Ansprüche, unter Einbeziehung des Anspruchs 6,
**dadurch gekennzeichnet, dass** das Funktionsbauteil (54, 56, 68) eine um eine mit der Nabendeckelachse (A) kollineare Pendelachse (P) relativ zum Nabendeckel (14) drehbare Pendelscheibe (68) ist, wobei die Pendelscheibe (68) auf ihrer dem Basisabschnitt (26) zugewandten Seite eine von der Pendelscheibe (68) axial weg auskragende Lagerformation (72), insbesondere Lagerbuchse (72), aufweist und wobei bevorzugt die Pendelscheibe (68) auf ihrer dem Basisabschnitt (26) zugewandten Seite radial außerhalb der Lagerformation (72), besonders bevorzugt am radialen Außenrand der Pendelscheibe (68), einen von der Pendelscheibe (68) axial weg auskragenden Mantelabschnitt (78) aufweist, welcher dem Schürzenabschnitt (38) radial gegenüberliegt.

## Claims

1. A commercial vehicle wheel hub (10) that is rotatable around a virtual hub rotation axis (N), having a center recess (12) through which the virtual hub rotation axis (N) passes and which is covered by a hub cover (14) connected to the wheel hub (10),
the hub cover (14) being embodied in at least two parts and comprising a base body (16) as well as a cover body (18) embodied separately from the base body (16) and connected to the base body (16) nonrotatably relative to the base body (16); the base body (16) comprising an installation side (16a) and a visible side (16b) located oppositely from the installation side (16a); the base body (16) being connected or connectable to the wheel hub (10) on the installation side (16a), and on the visible side (16b) being connected or connectable to an attachment portion (40) of the cover body (18); a receiving space (48) being constituted between the cover body (18) and the base body (16),
**characterized in that** one body (16, 18) from among the cover body (18) and base body (16) comprises a plurality of defined break points (28, 50, 58), which are embodied as local material thin points for separating out material configurations from the at least one body (16, 18) in order to facilitate the production of predetermined passages (29, 52, 60) through the at least one body (16, 18) from among the cover body (18) and base body (16).

2. The commercial vehicle wheel hub (10) according to Claim 1,
**characterized in that** the base body (16) comprises an annular sleeve portion (24) that extends along a base body axis (G), as well as a base portion (26) that projects radially inward from the sleeve portion (24) and preferably radially inwardly spans the sleeve portion (24).

3. The commercial vehicle wheel hub (10) according to Claim 1 or 2,
**characterized in that** the cover body (18) comprises an annular skirt portion (36) that extends along a cover body axis (D), and a cover portion (38) that radially inwardly spans the skirt portion (36).

4. The commercial vehicle wheel hub (10) according to Claims 2 and 3,
**characterized in that,** in a reference state with the cover body (18) connected to the base body (16) as intended, the base body axis (G) and the cover body axis (D), constituting collinear axes, form a hub cover axis (A), the cover portion (38) being arranged, with reference to the hub cover axis (A), at an axial distance from the base portion (26).

5. The commercial vehicle wheel hub (10) according to Claim 4,
**characterized in that** a receiving space (48), which is preferably delimited in an axial direction by the cover portion (38) and the base portion (26), and in a radial direction by the sleeve portion (24) and/or by the skirt portion (36) and/or by the attachment portion (40), is constituted between the cover body (18) and the base body (16).

6. The commercial vehicle wheel hub (10) according to Claim 5,
**characterized in that** a functional component (54, 56, 60), for example a hubodometer (54), a pendulum disk (68), or a pressure transfer conduit (30), for example as part of a tire pressure monitoring device (56), is arranged in the receiving space (48).

7. The commercial vehicle wheel hub (10) according to one of the preceding claims,
**characterized in that** the cover body (18) is transparent at least in a region of the cover portion (38), preferably at least the entire cover portion (38) being transparent, particularly preferably the entire cover body (18) being transparent.

8. The commercial vehicle wheel hub (10) according to one of the preceding claims,
**characterized in that** the defined break points are embodied to enable the production of predetermined passages (29, 52, 58) without use of a tool.

9. The commercial vehicle wheel hub (10) according to one of the preceding claims,
**characterized in that** the cover body (18) comprises in the cover portion (38) at least one defined break point (50) that is preferably rotationally symmetrical with respect to the cover body axis (D) constituting the rotational symmetry axis; and/or the cover body (18) comprises at least one defined break point (58) in the skirt portion (36).

10. The commercial vehicle wheel hub (10) according to one of the preceding claims,
**characterized in that** the base body (16) comprises in the base portion (26) at least one defined break point (28) that is preferably rotationally symmetrical with respect to the base body axis (G) constituting the rotational symmetry axis; and/or the base body (16) comprises at least one defined break point in the sleeve portion (24).

11. The commercial vehicle wheel hub (10) according to one of the preceding claims,
**characterized in that** the cover body (18) comprises on the cover portion (38) a rib configuration (64) which extends axially away from the cover portion (38) and is provided preferably coaxially with the cover body axis (D) encirclingly around it.

12. The commercial vehicle wheel hub (10) according to one of the preceding claims,
**characterized in that** the base body (16) comprises on the base portion (26) a bearing configuration (32) which extends axially away from the base portion (26) and is provided preferably coaxially with respect to the base body axis (G) encirclingly around it.

13. The commercial vehicle wheel hub (10) according to one of the preceding claims,
**characterized in that** one body from among the cover body (18) and base body (16), preferably the cover body (18), comprises snap-lock tabs (42) projecting toward the respective other body, and the respective other body, preferably the base body (16), comprises at least one snap-lock region (44) that interacts with the snap-lock tabs (42) in order to constitute a snap-lock engagement therewith; there being provided on one configuration from among the snap-lock tabs (42) and snap-lock region (44), preferably on the snap-lock tabs (42), snap-lock lugs (42a) that are in or can be brought into positive engagement with at least one snap-lock recess on the respective other configuration, preferably on the at least one snap-lock region (44).

14. The commercial vehicle wheel hub (10) according to one of the preceding claims,
**characterized in that** the base body (16) comprises on its installation side (16a) snap-locking clips (20) projecting toward the wheel hub (10), and the wheel hub (10), in order to constitute a snap-locking engagement with the snap-locking clips (20), comprises at least one snap-locking zone (22) that interacts with them; such that on one configuration from among the snap-lock clips (20) and snap-locking zone (22), preferably on the snap-locking clips (20), snap-lock protrusions (20a) are provided which are in or can be brought into positive engagement with snap-lock cutouts (22) on the respective other configuration, preferably on the at least one snap-locking zone (22).

15. The commercial vehicle wheel hub (10) according to one of the preceding claims, including Claim 6,
**characterized in that** the functional component (54, 56, 68) is a pendulum disk (68) that is rotatable relative to the hub cover (14) around a pendulum axis (P) that is collinear with the hub cover axis (A), the pendulum disk (68) comprising, on its side facing toward the base portion (26), a bearing configuration (72), in particular a bearing bushing (72), that protrudes axially away from the pendulum disk (68); and the pendulum disk (68) preferably comprising on its side facing toward the base portion (26), radially outside the bearing configuration (72), particularly preferably on the radially outer rim of the pendulum disk (68), an enveloping portion (78) which protrudes axially away from the pendulum disk (68) and is located radially opposite the skirt portion (38).

## Revendications

1. Moyeu de roue de véhicule utilitaire (10), qui peut tourner autour d'un axe virtuel de rotation de moyeu (N), comportant un évidement central (12) à travers lequel passe l'axe de rotation de moyeu virtuel (N) qui est recouvert par un recouvrement de moyeu (14) relié au moyeu de roue (10), le recouvrement de moyeu (14) étant formé en au moins deux parties et comportant un corps de base (16) ainsi qu'un corps de recouvrement (18) qui est formé séparément du corps de base (16) et est relié de manière non rotative au corps de base (16) par rapport au corps de base (16), le corps de base (16) comportant un côté de montage (16a) et un côté visible (16b) opposé au côté de montage (16a), le corps de base (16) étant relié ou pouvant être relié au moyeu de roue (10) du côté de montage (16a) et étant relié ou pouvant être relié à une section de montage (40) du corps de recouvrement (18) du côté visible (16b), un espace de réception (48) étant formé entre le corps de recouvrement (18) et le corps de base (16),
**caractérisé en ce que**
au moins un corps (16, 18) parmi corps de recouvrement (18) et corps de base (16) présente une pluralité de points de rupture prédéterminés (28, 50, 58) qui sont conçus en tant que points minces de matériau locaux pour séparer des formations de matériau dudit au moins un corps (16, 18) afin de faciliter la réalisation de passages prédéterminés (29, 52, 60) à travers ledit au moins un corps (16, 18) parmi corps de recouvrement (18) et corps de base (16).

2. Moyeu de roue de véhicule utilitaire (10) selon la revendication 1,
**caractérisé en ce que** le corps de base (16) présente une section de gaine annulaire (24) s'étendant le long d'un axe de corps de base (G) et une section de base (26) dépassant radialement vers l'intérieur de la section de gaine (24), de préférence recouvrant la section de gaine (24) radialement à l'intérieur.

3. Moyeu de roue de véhicule utilitaire (10) selon la revendication 1 ou 2,
**caractérisé en ce que** le corps de recouvrement (18) présente une section de jupe annulaire (36) s'étendant le long d'un axe de corps de recouvrement (D) et une section de recouvrement (38) recouvrant la section de jupe (36) radialement à l'intérieur.

4. Moyeu de roue de véhicule utilitaire (10) selon les revendications 2 et 3,
**caractérisé en ce que** - dans un état de référence avec le corps de recouvrement (18) relié au corps de base (16) comme défini - l'axe du corps de base (G) et l'axe du corps de recouvrement (D) forment comme axes colinéaires un axe de recouvrement de moyeu (A), la section de recouvrement (38) étant, par rapport à l'axe du recouvrement de moyeu (A), disposée à une distance axiale de la section de base (26).

5. Moyeu de roue de véhicule utilitaire (10) selon la revendication 4,
**caractérisé en ce qu'**un espace de réception (48) est formé entre le corps de recouvrement (18) et le corps de base (16), l'espace de réception étant de préférence délimité dans la direction axiale par la section de recouvrement (38) et la section de base (26) et dans la direction radiale par la section de gaine (24) et/ou par la section de jupe (36) ou/et par la section de montage (40).

6. Moyeu de roue de véhicule utilitaire (10) selon la revendication 5,
**caractérisé en ce qu'**un composant fonctionnel (54, 56, 60), tel qu'un compteur kilométrique de moyeu (54), un disque pendulaire (68) ou une ligne de transmission de pression (30) est disposé dans l'espace de réception (48), par exemple en tant qu'une partie d'un dispositif de surveillance de pression de pneu (56).

7. Moyeu de roue de véhicule utilitaire (10) selon l'une des revendications précédentes,
**caractérisé en ce que** le corps de recouvrement (18) est transparent au moins dans une région de la section de recouvrement (38), de préférence au moins toute la section de recouvrement (38) étant transparente, de manière particulièrement préférée tout le corps de recouvrement (18) étant transparent.

8. Moyeu de roue de véhicule utilitaire (10) selon l'une des revendications précédentes,
**caractérisé en ce que** les points de rupture prédéterminés sont conçus pour permettre la réalisation de passages prédéterminés (29, 52, 58) sans utilisation d'outils.

9. Moyeu de roue de véhicule utilitaire (10) selon l'une des revendications précédentes,
**caractérisé en ce que** le corps de recouvrement (18) présente au moins un point de rupture prédéterminé (50) dans la section de recouvrement (38) qui est de préférence symétrique en rotation par rapport à l'axe du corps de recouvrement (D) comme axe de symétrie en rotation, ou/et **en ce que** le corps de recouvrement (18) présente au moins un point de rupture prédéterminé (58) dans la section de jupe (36).

10. Moyeu de roue de véhicule utilitaire (10) selon l'une des revendications précédentes,
**caractérisé en ce que** le corps de base (16) présente au moins un point de rupture prédéterminé (28) dans la section de base (26) qui est de préférence symétrique en rotation par rapport à l'axe du corps de base (G) comme axe de symétrie en rotation, ou/et que le corps de base (16) présente au moins un point de rupture prédéterminé dans la section de gaine (24).

11. Moyeu de roue de véhicule utilitaire (10) selon l'une des revendications précédentes,
**caractérisé en ce que** le corps de recouvrement (18) présente sur la section de recouvrement (38) une formation de nervures (64) qui s'étend axialement à partir de la section de recouvrement (38) et qui est de préférence prévue coaxiale à l'axe du corps de recouvrement (D) et circonférentielle autour de celui-ci.

12. Moyeu de roue de véhicule utilitaire (10) selon l'une des revendications précédentes,
**caractérisé en ce que** le corps de base (16) présente sur la section de base (26) une formation de palier (32) qui s'étend axialement à partir de la section de base (26) et qui est de préférence prévue coaxiale à l'axe du corps de base (G) et circonférentielle autour de celui-ci.

13. Moyeu de roue de véhicule utilitaire (10) selon l'une des revendications précédentes,
**caractérisé en ce qu'**un corps parmi corps de recouvrement (18) et corps de base (16), de préférence le corps de recouvrement (18), présente des languettes d'encliquetage (42) faisant saillie vers l'autre corps respectif, et l'autre corps respectif, de préférence le corps de base (16), pour former un engagement d'encliquetage avec les languettes d'encliquetage (42), présente au moins une région d'encliquetage (44) en interaction avec elles, dans lequel des nez d'encliquetage (42a) sont prévues sur une formation comprenant des languettes d'encliquetage (42) et une région d'encliquetage (44), de préférence sur les languettes d'encliquetage (42), les nez d'encliquetage étant en engagement positif ou pouvant être mises en engagement positif avec au moins un évidement d'encliquetage dans l'autre formation respective, de préférence sur ladite au moins une région d'encliquetage (44).

14. Moyeu de roue de véhicule utilitaire (10) selon l'une des revendications précédentes,
**caractérisé en ce que** le corps de base (16) présente sur son côté de montage (16a) des pattes d'encliquetage (20) faisant saillie vers le moyeu de roue (10) et le moyeu de roue (10) présente au moins une région d'encliquetage (22) en interaction avec les pattes d'encliquetage (20) pour former avec ces dernières une prise d'encliquetage, dans laquelle des saillies d'encliquetage (20a) sont prévues sur une formation comprenant des pattes d'encliquetage (20) et une région d'encliquetage (22), de préférence sur les pattes d'encliquetage (20), lesquelles saillies d'encliquetage (20a) sont ou peuvent être mises en engagement positif avec des évidements d'encliquetage (22) sur l'autre formation respective, de préférence sur ladite au moins une région d'encliquetage (22).

15. Moyeu de roue de véhicule utilitaire (10) selon l'une des revendications précédentes, y compris la revendication 6,
**caractérisé en ce que** le composant fonctionnel (54, 56, 68) est un disque pendulaire (68) pouvant tourner autour d'un axe de pendule (P) colinéaire à l'axe de recouvrement de moyeu (A) par rapport au recouvrement de moyeu (14), le disque pendulaire (68) présentant sur sa face tournée vers la section inférieure (26) une formation de palier (72) faisant saillie axialement en porte à faux du disque pendulaire (68), en particulier coussinet de palier (72), et dans lequel de préférence le disque pendulaire (68), sur sa face tournée vers la section de base (26), présente radialement à l'extérieur de la formation de palier (72), en particulier de préférence sur le bord extérieur radial du disque pendulaire (68), une section de revêtement (78) faisant saillie en porte à faux axialement à l'opposé du disque pendulaire (68), laquelle section de revêtement est radialement en face de la section de jupe (38).
